# EUROPEAN PATENT APPLICATION

(11) **EP 4 729 426 A1**
(43) Date of publication of application: **22.04.2026**
(21) Application number: 23941377.6
(22) Date of filing: 07.12.2023
(51) Int. Cl.: B65B 33/02, B65B 35/56, B65B 35/10

(54) **FILM COATING DEVICE AND FILM COATING METHOD**

(30) Priority: 13.06.2023 CN 202310704380
(71) Applicant: Eve Power Co., Ltd., Jingmen, Hubei 448000 (CN)
(72) Inventor: LI, Weibo, Jingmen, Hubei 448000 (CN); YUAN, Dingding, Jingmen, Hubei 448000 (CN); CHEN, Liquan, Jingmen, Hubei 448000 (CN); SU, Bin, Jingmen, Hubei 448000 (CN); LIU, Jincheng, Jingmen, Hubei 448000 (CN)
(74) Representative: Nederlandsch Octrooibureau
(86) International application number: PCT/CN2023/137130
(87) International publication number: WO 2024/255156

(57) **Abstract**

The present application provides a film coating device and a film coating method. The film coating device comprises a conveying mechanism, a film coating mechanism and a guide mechanism. The conveying mechanism is configured to convey a battery in a first direction; the film coating mechanism comprises a driving assembly, two supports arranged at an interval and two pressing members arranged in parallel, and the supports are connected to the driving assembly; and the film coating mechanism is mounted on the guide mechanism.

## Description

### FIELD

The present disclosure relates to battery technologies, and more particularly, to a packaging device and a packaging method.

### BACKGROUND

Currently, a packaging device mainly adopts a single protective film to pack a prismatic lithium-ion battery. During packaging, a battery needs to be rotated multiple times by the packaging device to complete a package of side surfaces, a top surface, and a bottom surface of the battery.

### SUMMARY

A battery needs to be rotated multiple times by a packaging device. In addition, in the process of rotating the battery, the packaging device needs to stop conveying the battery. In this way, the time required for packaging can be greatly increased, reducing a manufacturing efficiency of the packaging device.

Therefore, it is necessary to provide a packaging device and a packaging method to improve this defect.

An embodiment of the present disclosure provides a packaging device and a packaging method, in which the battery can be packed without rotating the battery. In this way, the time required for packaging can be greatly reduced, improving the manufacturing efficiency of the packaging device.

To this end, the present disclosure adopts the following technical solutions.

In a first aspect, the embodiment of the present disclosure provides a packaging device. The packaging device includes: a conveying mechanism configured to convey a battery in a first direction, wherein prior to the battery being conveyed to a position where a packaging mechanism is disposed, a protective film is attached to and extends beyond each of two large-sized side surfaces of the battery; the packaging mechanism including a driving assembly, two brackets spaced apart from each other, and two pressing members arranged parallel to each other, the two pressing members are rotatably mounted at the two brackets, respectively, the two brackets being connected to the driving assembly, and the driving assembly being configured to drive the two pressing members to move towards the battery and press a part of the protective film extending beyond the large-sized side surface of the battery against a top surface, a bottom surface, or two small-sized side surfaces of the battery; and a guide mechanism, the packaging mechanism being mounted at the guide mechanism, the guide mechanism being configured to: prior to the battery being conveyed to a position where the packaging mechanism is disposed, drive the packaging mechanism to move towards the battery in a second direction; and when the battery is conveyed to the position where the packaging mechanism is disposed, drive the packaging mechanism to move in the first direction same as the battery and synchronously with the battery, and the first direction being different from the second direction.

In a first aspect, the embodiment of the present disclosure provides a packaging method. The packaging method uses the packaging device mentioned above to pack a battery. The packaging method includes: placing a battery to be packed on a conveying mechanism, wherein a protective film is attached to and extends beyond each of two large-sized side surfaces of the battery; conveying, by the conveying mechanism, the battery in a first direction; prior to the battery being conveyed to a position where a packaging mechanism is disposed, driving, by a guide mechanism, the packaging mechanism to move towards the battery in a second direction, the first direction being different from the second direction; and when the battery is conveyed to the position where the packaging mechanism is disposed, driving, by the guide mechanism, the packaging mechanism to move in the first direction same as the battery and synchronously with the battery, and driving, by a driving assembly of the packaging mechanism, the two pressing members to move towards the battery and press a part of the protective film extending beyond the large-sized side surface of the battery against a top surface, a bottom surface, or two small-sized side surfaces of the battery.

In the present disclosure, the packaging device includes the conveying mechanism, the packaging mechanism, and the guide mechanism. The conveying mechanism is configured to convey the battery in the first direction. Prior to the battery being conveyed to the position where the packaging mechanism is disposed, the protective film is attached to each of the two large-sized side surfaces of the battery. The protective film extends beyond each of the two large-sized side surfaces of the battery. The packaging mechanism is mounted at the guide mechanism. The packaging mechanism includes the driving assembly, the two brackets spaced apart from each other, and the two pressing members arranged parallel to each other. The two pressing members are rotatably mounted at the two brackets, respectively. The two brackets are connected to the driving assembly. Prior to the battery being conveyed to the position where the packaging mechanism is disposed, the packaging mechanism is driven by the guide mechanism to move towards the battery in the second direction. When the battery is conveyed to the position where the packaging mechanism is disposed, the packaging mechanism is driven by the guide mechanism to move in the same direction as the battery and synchronously with the battery. Also, the driving assembly is configured to drive the two pressing members to move towards the battery and press the part of the protective film extending beyond the large-sized side surface of the battery against the top surface, the bottom surface, or the two small-sized side surfaces of the battery. Therefore, the side surfaces, the top surface, and the bottom surface of the battery can be packed without rotating the battery, reducing the time required for packaging and thus improving the manufacturing efficiency of the packaging device.

### BRIEF DESCRIPTION OF THE DRAWINGS

FIG. 1 is a schematic structural view of one packaging device according to an embodiment of the present disclosure.
FIG. 2 is a schematic structural view of another packaging device according to an embodiment of the present disclosure.
FIG. 3 is a schematic flowchart of a packaging method according to an embodiment of the present disclosure.

### DETAILED DESCRIPTION

In the description of the present disclosure, unless otherwise clearly specified and limited, terms such as "connect", "connect to", and "fixed to" should be understood in a broad sense. For example, it may be a fixed connection, a detachable connection, or an integral connection; mechanical connection or electrical connection; direct connection or indirect connection through an intermediate; or internal communication of two components or the interaction relationship between two components.

In the present disclosure, unless otherwise clearly stipulated and limited, the first feature being "on" or "under" the second feature may mean that the first feature is in direct contact with the second feature, or the first feature is in indirect contact with the second feature through another feature between the first feature and the second feature. In addition, the first feature being "above" the second feature means that the first feature is directly above or obliquely above the second feature, or simply means that the level of the first feature is higher than that of the second feature. The first feature being "below" the second feature may mean that the first feature is directly below or obliquely below the second feature, or simply mean that the level of the first feature is lower than that of the second feature.

In the description of the present disclosure, the orientation or the position indicated by terms such as "on", "below", and "right" refer to the orientation or the position as shown in the drawings, and is only for the convenience of describing the present disclosure and simplifying the operation, rather than indicating or implying that the pointed device or element must have a specific orientation, or be constructed and operated in a specific orientation, and therefore cannot be understood as a limitation to the present disclosure. In addition, the terms "first" and "second" are only configured to distinguish in description and have no special meanings.

An embodiment of the present disclosure provides a packaging device and a packaging method, which can pack the battery without rotating the battery. In this way, the time required for packaging can be greatly reduced, improving a manufacturing efficiency of the packaging device.

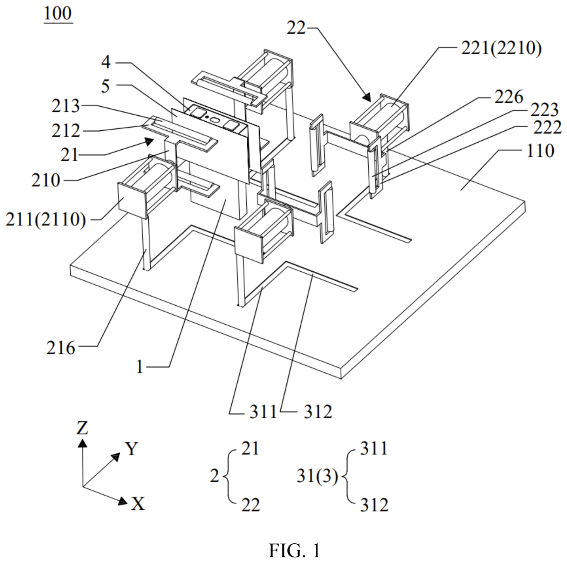

As illustrated in FIG. 1, which is a schematic structural view of one packaging device according to an embodiment of the present disclosure, a packaging device 100 includes a conveying mechanism 1, a packaging mechanism 2, and a guide mechanism 3.

The packaging device 100 further includes a stage 110. The conveying mechanism 1, the packaging mechanism 2, and the guide mechanism 3 are all mounted at the stage 110.

The conveying mechanism 1 is configured to convey a battery 4 in a first direction X. Prior to the battery 4 being conveyed to a position where the packaging mechanism 2 is disposed, a protective film 5 is attached to each of two large-sized side surfaces of the battery 4. The protective film 5 extends beyond the large-sized side surface of the battery 4.

It should be noted that the battery 4 is a prismatic lithium-ion battery. The battery 4 includes four rectangular side surfaces, a rectangular top surface, and a rectangular bottom surface. Two oppositely disposed side surfaces with a relatively large area are regarded as the large-sized side surfaces of the battery 4, and another two oppositely disposed side surfaces with a relatively small area are regarded as small-sized side surfaces of the battery 4. A surface of the battery 4 connected to the conveying mechanism 1 is regarded as a bottom surface of the battery 4. A surface of the battery 4 away from the conveying mechanism 1 is regarded as a top surface of the battery 4. A part of the bottom surface of the battery 4 is connected to the conveying mechanism 1. A part of the bottom surface of the battery 4 that is uncovered by the conveying mechanism 1, the small-sized side surfaces of the battery 4, and the top surface of the battery 4 are all exposed to enable the packaging mechanism 2 to pack the battery 4.

The conveying mechanism 1 may include a driving assembly, a guide rail, and a moving member movably mounted on the guide rail. The moving member is connected to the driving assembly. The battery 4 is fixedly connected to the moving member at a bottom of the battery 4. The guide rail may be an annular guide rail. When the battery 4 is moved close to the packaging mechanism 2, the driving assembly may drive the moving member to move in the first direction X on the guide rail. The driving assembly may be composed of a motor and a crawler belt. The moving member may include a guide block and a mounting fixture fixedly mounted at the guide block. The guide block is engaged with the crawler belt. The battery 4 is placed on the mounting fixture.

In one embodiment, the packaging device further includes a cutting mechanism and a large-sized side surface film attaching mechanism. The cutting mechanism is configured to cut a protective film web into a protective film adapted to a shape of the battery 4. The large-sized side surface film attaching mechanism is configured to attach the cut protective film 5 to the large-sized side surface of the battery 4. For a structure of the cutting mechanism and a structure of the large-sized side surface film attaching mechanism, reference can be made to a packaging device in the related art, which is not limited herein.

The packaging mechanism 2 includes a driving assembly, two brackets spaced apart from each other, and two pressing members arranged parallel to each other. The two pressing members are rotatably mounted at the two brackets, respectively. The two brackets are connected to the driving assembly. The driving assembly is configured to drive the two pressing members to move towards the battery and press a part of the protective film extending beyond the large-sized side surface of the battery against a top surface, a bottom surface, or two small-sized side surfaces of the battery. Therefore, the top surface, the side surfaces, and the bottom surface of the battery 4 can be packed without rotating the battery 4, reducing the time required for packaging and thus improving the manufacturing efficiency of the packaging device.

The packaging mechanism 2 is mounted on the guide mechanism 3. The guide mechanism 3 is configured to: prior to the battery 4 being conveyed to a position where the packaging mechanism 2 is disposed, drive the packaging mechanism 2 to move towards the battery 4 in a second direction Y; and when the battery 4 is conveyed to the position where the packaging mechanism 2 is disposed, drive the packaging mechanism 2 to move in a same direction as the battery 4 and synchronously with the battery 4. When the packaging mechanism 2 and the battery 4 move synchronously in the same direction, the packaging mechanism 2 simultaneously enables a part of the protective film extending beyond the large-sized side surface of the battery to be pressed against the top surface, the bottom surface, or the two small-sized side surfaces of the battery. Therefore, during packaging, the battery 4 has no downtime, no flipping, or other cycle time delays, further improving the manufacturing efficiency of the packaging device.

It should be noted that the first direction X is different from the second direction Y. The first direction X is a direction in which the conveying mechanism 1 conveys the battery 4. The second direction Y is arranged at an angle to the first direction X. The second direction Y is a direction in which the packaging mechanism 2 moves prior to the battery 4 being conveyed to the position where the packaging mechanism 2 is disposed. In the process that the battery 4 is conveyed to the position where the packaging mechanism 2 is disposed, the packaging mechanism 2 moves in the second direction Y and gradually moves towards the battery 4 until the battery 4 is conveyed to the position where the packaging mechanism 2 is disposed.

In one embodiment, the first direction X is perpendicular to the second direction Y. That is, an angle between the first direction X and the second direction Y is 90 degrees.

In some embodiments, the packaging mechanism 2 includes a top-bottom surface packaging mechanism 21 and a small-sized side surface packaging mechanism 22. The packaging device 100 includes a plurality of guide mechanisms 3. The top-bottom surface packaging mechanism 21 and the small-sized side surface packaging mechanism 22 are separately connected to a corresponding one of the guide mechanisms 3. The top-bottom surface packaging mechanism 21 includes a first driving assembly 211, two first brackets 212 spaced apart from each other, and two first pressing members 213 overlapping with each other in a third direction Z and parallel to each other. The third direction Z is perpendicular to both the first direction X and the second direction Y. Each of the two first pressing members 213 is rotatably mounted at a corresponding one of the two first brackets 212. The two first brackets 212 are connected to the first driving assembly 211. The first driving assembly 211 is configured to drive the two first pressing members 213 to move together in the second direction Y and press a part of the protective film extending beyond the large-sized side surface of the battery 4 against the top surface and the bottom surface of the battery 4.

The small-sized side surface packaging mechanism 22 includes a second driving assembly 221, two second brackets 222 spaced apart from each other, and two second pressing members 223 arranged at a same level and parallel to each other. The two second pressing members 223 are rotatably mounted at the two second brackets 222, respectively. The second driving assembly 221 is connected to the two second brackets 222. The second driving assembly 221 is configured to drive the two second pressing members 223 to move together in the second direction Y and press a part of the protective film extending beyond the large-sized side surface of the battery against the two small-sized side surfaces of the battery.

In one embodiment, as illustrated in FIG. 1, the first driving assembly 211 includes a first air cylinder 2110. A piston of the first air cylinder 2110 is configured to reciprocate in the second direction Y. The first brackets 212 are fixedly connected to a piston rod of the first air cylinder 2110. The first air cylinder 2110 is mounted at the guide mechanism 3 via a first mounting bracket 216.

Each of the two first brackets 212 has a notch. Mounting shafts are provided to protrude from the notch at two sides of the notch. The mounting shafts and a corresponding one of the two first brackets 212 are formed as one piece. Each of the two first pressing members 213 is a roller. The first pressing member 213 has a central axis parallel to the first direction X. The first pressing member 213 has a hollow structure with two opened ends. Two mounting shafts are respectively inserted into the two opened ends of the first pressing member 213 to limit the first pressing member 213. The first pressing member 213 may rotate around the mounting shafts. Two first brackets 212 are spaced apart from each other in the third direction Z. A first connection bracket 210 is disposed between the two first brackets 212. The two first brackets 212 may be fixedly connected to the first connection bracket 210 through welding, a threaded connection, bonding, or the like. Alternatively, the two first brackets 212 and the first connection bracket 210 are formed as one piece. The first connection bracket 210 may be fixedly connected to the piston rod of the first air cylinder 2110 through a threaded connection. A distance between the two first brackets 212 is greater than or equal to a height of the battery 4 in the third direction Z.

When the battery 4 moves to a position where the top-bottom surface packaging mechanism 21 is disposed, the top-bottom surface packaging mechanism 21 is driven by the guide mechanism 3 to move synchronously with the battery 4 in the first direction X (in the same direction as the battery 4). In the process that the top-bottom surface packaging mechanism 21 and the battery 4 move synchronously in the first direction X, the two first pressing members 213 are driven by the first air cylinder 2110 to move towards the battery 4 in the second direction Y. The first pressing member 213 located on the upper side is configured to enable a part of the protective film 5 extending beyond an upper end of the large-sized side surface of the battery 4 to be bent and pressed against the top surface of the battery 4. The first pressing member 213 located on the bottom side is configured to enable a part of the protective film 5 extending beyond a lower end of the large-sized side surface of the battery 4 to be bent and pressed against the bottom surface of the battery 4.

In some embodiments, the packaging mechanism 2 includes at least two top-bottom surface packaging mechanisms 21. The at least two top-bottom surface packaging mechanisms 21 are symmetrically arranged at two opposite sides of the battery 4.

In one embodiment, as illustrated in FIG. 1, the packaging mechanism 2 includes two top-bottom surface packaging mechanisms 21. The two top-bottom surface packaging mechanisms 21 are symmetrically arranged at the two opposite sides of the battery 4. A protective film extending beyond the large-sized side surface is attached to each of the two large-sized side surfaces of the battery 4. Each of the two top-bottom surface packaging mechanisms 21 is configured to enable a part of the protective film attached on the corresponding large-sized side surface to be pressed against and attached to the top surface and the bottom surface of the battery.

In other embodiments, the number of the top-bottom surface packaging mechanisms 21 in the packaging mechanism 2 is not limited to 2 in the above embodiment, it may also be 4, 6, 8, or the like. The plurality of top-bottom surface packaging mechanisms 21 may be symmetrically arranged at the two opposite sides of the battery 4, in such a manner that top surfaces and bottom surfaces of a plurality of batteries can be packed simultaneously.

In one embodiment, as illustrated in FIG. 1, the second driving assembly 221 includes a second air cylinder 2210. A piston of the second air cylinder 2210 is configured to reciprocate in the second direction Y. The second bracket 222 is fixedly connected to a piston rod of the second air cylinder 2210. The second air cylinder 2210 is mounted at the guide mechanism 3 via a second mounting bracket 226.

Each of the two second brackets 222 has a notch. Mounting shafts are provided to protrude from the notch at two sides of the notch. The mounting shafts and a corresponding one of the second brackets 222 are formed as one piece. Each of the two second pressing members 223 is the roller. The second pressing member 223 has a central axis parallel to the third direction Z. The second pressing member 223 has a hollow structure with two opened ends. Two mounting shafts are respectively inserted into the two opened ends of the second pressing member 223 to limit the respective second pressing member 223. The second pressing member 223 may rotate around the mounting shafts. Two second brackets 222 are spaced apart from each other in the first direction X. A second connection bracket 220 is disposed between the two second brackets 222. The second brackets 222 may be fixedly connected to the second connection bracket 220 through welding, a threaded connection, bonding, or the like. Alternatively, the second brackets 222 and the second connection bracket 210 are formed as one piece. The second connection bracket 220 may be fixedly connected to the piston rod of the second air cylinder 2210 through a threaded connection. A distance between the two second brackets 222 is greater than or equal to a length of the battery 4 in the first direction X.

When the battery 4 moves to a position where the small-sized side surface packaging mechanism 22 is disposed, the small-sized side surface packaging mechanism 22 is driven by the guide mechanism 3 to move synchronously with the battery 4 in the first direction X (i.e., in the same direction as the battery 4). In the process that the small-sized side surface packaging mechanism 22 and the battery 4 move synchronously in the first direction X, the two second pressing members 223 are driven by the second air cylinder 2210 to move towards the battery 4 in the second direction Y. The second pressing member 223 located on a left side is configured to enable a part of a protective film 5 extending beyond a left side of the large-sized side surface of the battery 4 to be bent and pressed against a left small-sized side surface of the battery 4. The second pressing member 223 located on a right side is configured to enable a part of the protective film 5 extending beyond a right side of the large-sized side surface of the battery 4 to be bent and pressed against a right small-sized side surface of the battery 4.

In some embodiments, the packaging mechanism 2 includes at least two small-sized side surface packaging mechanisms 22. The at least two small-sized side surface packaging mechanisms 22 are symmetrically arranged at the two opposite sides of the battery 4.

In one embodiment, as illustrated in FIG. 1, the packaging mechanism 2 includes two small-sized side surface packaging mechanisms 22. The two small-sized side surface packaging mechanisms 22 are symmetrically arranged at the two opposite sides of the battery 4. A protective film extending beyond the large-sized side surface is attached to each of the two large-sized side surfaces of the battery 4. Each of the two small-sized side surface packaging mechanisms 22 is configured to enable a part of the protective film attached on the corresponding large-sized side surface to be pressed against and attached to the top surface and the bottom surface of the battery 4.

In other embodiments, the number of the small-sized side surface packaging mechanisms 22 in the packaging mechanism 2 is not limited to 2 in the above embodiment, it may also be 4, 6, 8, or the like. The plurality of small-sized side surface packaging mechanisms 22 may be symmetrically arranged at two opposite sides of the battery 4, in such a manner that the top surfaces and bottom surfaces of the plurality of batteries can be packed simultaneously.

In some embodiments, the packaging mechanism 2 includes the top-bottom surface packaging mechanism 21 and the small-sized side surface packaging mechanism 22. The packaging device 100 includes the plurality of guide mechanisms 3. The top-bottom surface packaging mechanism 21 and the small-sized side surface packaging mechanism 22 are separately connected to a corresponding one of the guide mechanisms 3. The top-bottom surface packaging mechanism 21 includes the first driving assembly 211, the two first brackets 212 spaced apart from each other, and the two first pressing members 213 overlapping with each other in the third direction Z and being parallel to each other. The third direction Z is perpendicular to both the first direction X and the second direction Y. The two first pressing members 213 are rotatably mounted at the two first brackets 212, respectively. The two first brackets 212 are connected to the first driving assembly 211. The first driving assembly 211 is configured to drive the two first pressing members 213 to move towards each other in the third direction Z and press a part of the protective film extending beyond the large-sized side surface of the battery against the top surface and the bottom surface of the battery.

The small-sized side surface packaging mechanism 22 includes the second driving assembly 221, two second brackets 222 spaced apart from each other, and two second pressing members 223 arranged at the same level and parallel to each other. The two second pressing members 223 are rotatably mounted at the two second brackets 222, respectively. The second driving assembly 221 is connected to the two second brackets 222. The second driving assembly 221 is configured to drive the two second pressing members 223 to move towards each other in the first direction X and press a part of the protective film extending beyond the large-sized side surface of the battery against the two small-sized side surfaces of the battery.

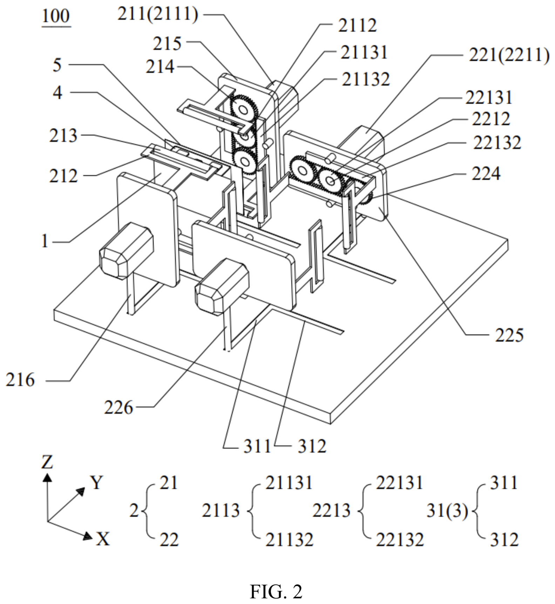

In one embodiment, as illustrated in FIG. 2, which is a schematic structural view of another packaging device according to an embodiment of the present disclosure, a structure thereof is substantially the same as that of the one packaging device illustrated in FIG. 1. A difference lies in that: the first driving assembly 211 includes a first motor 2111, a first transmission shaft 2112, and a first transmission assembly 2113. The first transmission shaft 2112 is connected to the first motor 2111 and the first transmission assembly 2113. The two first brackets 212 are connected to the first transmission assembly 2113. The first transmission assembly 2113 is configured to convert a rotation of the first transmission shaft 2112 into a rectilinear movement of the two first pressing members 213 in the third direction Z.

The first transmission assembly 2113 includes a first driving gear 21131 and two first racks 21132. The first driving gear 2113 is sleeved around the first transmission shaft 2212. The two first racks 21132 are respectively disposed on a left side and a right side of the first driving gear 21131, and engaged with the first driving gear 21131. Each of the two first brackets 212 may be fixedly connected to a corresponding one of the two first racks 21132 through welding, bonding, or the like. Alternatively, one of the two first brackets 212 and a corresponding one of the first racks 21132 may be formed as one piece.

In one embodiment, the top-bottom surface packaging mechanism 21 further includes a first driven gear 214 and a first mounting plate 215. The first driven gear 214 is rotatably mounted at the first mounting plate 215. The first driven gear 214 is spaced apart from the first driving gear 21131 in the third direction Z. The first racks 21132 are engaged with the first driven gear 214.

The top-bottom surface packaging mechanism 21 includes two first driven gears 214. The two first driven gears 214 are respectively disposed on an upper side and a lower side of the first driving gear 21131. Fixed shafts are disposed at the first mounting plate 215. Each of the first driven gears 214 is sleeved around a corresponding one of the fixed shafts and may rotate relative to the corresponding fixed shaft. The first transmission shaft 2112 penetrates the first mounting plate 215. The first mounting plate 215 may be fixedly connected to the first motor 2111 through a threaded connection. By disposing the two first driven gears 214 respectively on the upper side and the lower side of the first driving gear 21131, movement paths of the first racks 21132 in the third direction Z can be extended, and the movements of the first racks 21132 can be more stable.

When the battery moves to a position where the top-bottom surface packaging mechanism 21 is disposed, the top-bottom surface packaging mechanism 21 is driven by the guide mechanism 3 to move synchronously with the battery 4 in the first direction X (i.e., in the same direction as the battery 4). In the process that the top-bottom surface packaging mechanism 21 and the battery 4 move synchronously in the first direction X, the first motor 2111 drives the first driving gear 21131 to rotate via the first transmission shaft 2112. Under the action of an engagement force, the two first racks 21132 move in the third direction Z and in a direction opposite to the third direction Z, respectively, and drive the two first pressing members 213 to move towards each other in the third direction Z, enabling the parts of the protective film extending beyond the upper end and the lower end of the large-sized side surface of the battery 4 to be pressed against the top surface and the bottom surface of the battery 4, respectively.

In one embodiment, as illustrated in FIG. 2, the packaging mechanism 2 includes two top-bottom surface packaging mechanisms 21. The two top-bottom surface packaging mechanisms 21 are symmetrically arranged at the two opposite sides of the battery 4. A protective film extending beyond the large-sized side surface is attached to each of the two large-sized side surfaces of the battery 4. Each of the two top-bottom surface packaging mechanisms 21 is configured to enable a part of a protective film attached on the corresponding large-sized side surface to be pressed against and attached to the top surface and the bottom surface of the battery 4.

In other embodiments, the number of the top-bottom surface packaging mechanism 21 in the packaging mechanism 2 is not limited to 2 in the above embodiment, it may also be 4, 6, 8, or the like. The plurality of top-bottom surface packaging mechanisms 21 may be symmetrically arranged at the two opposite sides of the battery, in such a manner that top surfaces and bottom surfaces of the plurality of batteries can be packed simultaneously.

The second driving assembly 221 includes a second motor 2211, a second transmission shaft 2212, and a second transmission assembly 2213. The second transmission shaft 2212 is connected to each of the second motor 2211 and the second transmission assembly 2213. The second brackets 222 are connected to the second transmission assembly 2213. The second transmission assembly 2213 is configured to convert a rotation of the second transmission shaft 2212 into a rectilinear movement of the two second pressing members 223 in the first direction X.

The second transmission assembly 2213 includes a second driving gear 22131 and two second racks 22132. The second driving gear 22131 is sleeved around the second transmission shaft 2212. The two second racks 22132 are disposed on an upper side and a lower side of the second driving gear 22131, respectively, and engaged with the second driving gear 22131. Each of the second brackets 222 may be fixedly connected to a corresponding one of the two second racks 22132 through welding, bonding, or the like. Alternatively, one of the two second brackets 222 and a corresponding one of the two second racks 22132 may be formed as one piece.

In one embodiment, the small-sized side surface packaging mechanism 22 further includes a second driven gear 224 and a second mounting plate 225. The second driven gear 224 is rotatably mounted at the second mounting plate 225. The second driven gear 224 is spaced apart from the second driving gear 22131 in the first direction X. The second driven gear 224 is arranged at the same level as the second driving gear 22131. The two second racks 22132 are engaged with the second driven gear 224.

The small-sized side surface packaging mechanism 22 includes two second driven gears 224. The two second driven gears 224 are disposed on the upper side and the lower side of the second driving gear 22131, respectively. Fixed shafts are disposed at the second mounting plate 225. Each of the two second driven gears 224 is sleeved around a corresponding one of the fixed shafts and may rotate relative to the corresponding fixed shaft. The second transmission shaft 2212 penetrates the second mounting plate 225. The second mounting plate 225 may be fixedly connected to the second motor 2211 through a threaded connection. By disposing the second driven gears 224 on the upper side and the lower side of the second driving gear 22131, movement paths of the two second racks 22132 in the third direction Z can be extended, and movements of the two second racks 22132 can be more stable.

When the battery moves to the position where the small-sized side surface packaging mechanism 22 is disposed, the small-sized side surface packaging mechanism 22 is driven by the guide mechanism 3 to move synchronously with the battery 4 in the first direction X (i.e., in the same direction as the battery 4). In the process that the small-sized side surface packaging mechanism 22 and the battery 4 move synchronously in the first direction X, the second motor 2211 drives the second driving gear 22131 to rotate via the second transmission shaft 2212. Under the action of an engagement force, the two second racks 22132 move in the first direction X and in a direction opposite to the first direction X, respectively, and drive the two second pressing members 223 to move towards each other in the first direction X, enabling the parts of a protective film extending beyond a left side and a right side of the large-sized side surface of the battery 4 to be pressed against the two small-sized side surfaces of the battery, respectively.

In one embodiment, as illustrated in FIG. 2, the packaging mechanism 2 includes two small-sized side surface packaging mechanisms 22. The two small-sized side surface packaging mechanisms 22 are symmetrically arranged at the two opposite sides of the battery 4. A protective film extending beyond the large-sized side surface is attached to each of the two large-sized side surfaces of the battery 4. Each of the two small-sized side surface packaging mechanisms 22 is configured to enable a part of a protective film attached on the corresponding large-sized side surface to be pressed against and attached to the two small-sized side surfaces of the battery 4.

In other embodiments, the number of the small-sized side surface packaging mechanisms 22 in the packaging mechanism 2 is not limited to 2 in the above embodiment, it may also be 4, 6, 8, or the like. The plurality of small-sized side surface packaging mechanisms 22 may be symmetrically arranged at the two opposite sides of the battery 4, in such a manner that top surfaces and bottom surfaces of the plurality of batteries can be packed simultaneously.

In some embodiments, the guide mechanism 3 includes a movable member (not illustrated) and a guide member 31. The movable member is movably mounted at the guide member 31. The packaging mechanism 2 is mounted at the movable member. The guide member 31 has a first segment 311 and a second segment 312 connected to the first segment 311. The first segment 311 is parallel to the second direction Y. The second segment 312 is parallel to the first direction X.

In one embodiment, the guide member 31 is a guide rail. The guide rail is divided into two parts: the first segment 311 and the second segment 312. The movable member is a moving slider. The movable member is slidably mounted at the guide rail and may slide along the first segment 311 and the second segment 312. The packaging mechanism 2 may be fixedly mounted at the movable member through a threaded connection. The guide mechanism 3 may further include a driving member connected to the movable member 31. The driving member is configured to drive the movable member to move in the first direction X or the second direction Y along the guide member 31.

In one embodiment, as illustrated in FIG. 1 and FIG. 2, the packaging device 100 includes four guide mechanisms 3. Each of the four guide mechanisms 3 is connected to a corresponding one of the top-bottom surface packaging mechanisms 21 or a corresponding one of the small-sized side surface packaging mechanisms 22. In addition, each of the four guide mechanisms 3 is configured to drive a corresponding one of the top-bottom surface packaging mechanisms 21 or a corresponding one of the small-sized side surface packaging mechanisms 22 to move in the first direction X or the second direction Y.

In some embodiments, the packaging device 100 may further include a grasping mechanism configured to attach a top insulating sheet to the top surface of the battery 4. The grasping mechanism may be, but is not limited to, a manipulator.

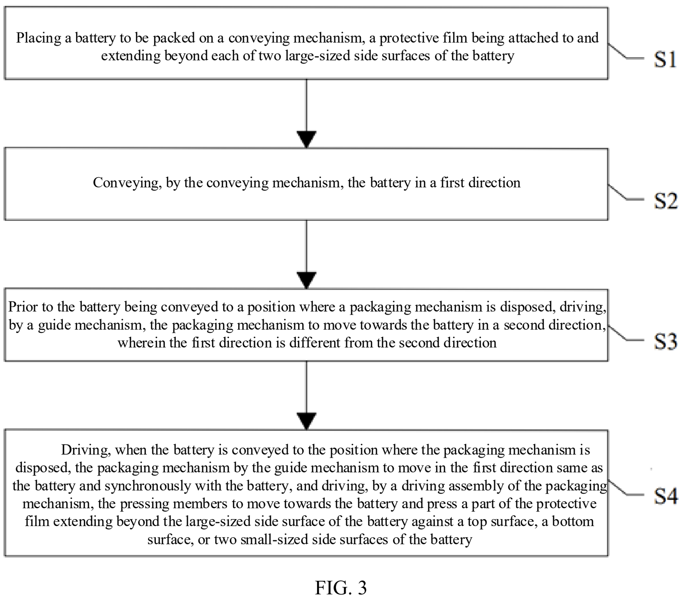

Based on the packaging device according to the above embodiments of the present disclosure, an embodiment of the present disclosure further provides a packaging method. The packaging method uses the packaging device according to any one of the above embodiments to pack the battery. As illustrated in FIG. 1 to FIG. 3, FIG. 3 is a schematic flowchart of a packaging method according to an embodiment of the present disclosure, the packaging method includes operations at blocks.

At Step S1, a battery 4 to be packed is placed on a conveying mechanism 1. A protective film 5 is attached to each of two large-sized side surfaces of the battery 4. The protective film 5 extends beyond each of the two large-sized side surfaces of the battery 4.

At Step S2, the battery 4 is conveyed by the conveying mechanism 1 in a first direction X.

At Step S3, prior to the battery 4 being conveyed to a position where a packaging mechanism 2 is disposed, the packaging mechanism 2 is driven by a guide mechanism 3 to move towards the battery 4 in a second direction Y. The first direction X is different from the second direction Y.

At Step S4, when the battery 4 is conveyed to the position where the packaging mechanism 2 is disposed, the packaging mechanism 2 is driven by the guide mechanism 3 to move in the first direction as the battery 4 and synchronously with the battery 4. The two pressing members are driven by a driving assembly of the packaging mechanism 2 to move towards the battery 4, and the part of the protective film extending beyond the large-sized side surface of the battery 4 are pressed against a top surface, a bottom surface, or two small-sized side surfaces of the battery.

In one embodiment, prior to the battery 4 being conveyed to the position where the packaging mechanism 2 is disposed, the packaging method further includes: cutting the protective film web into a protective film 5 adapted to a size of the battery 4, and attaching the protective film 5 to each of the two large-sized side surfaces of the battery 4.

In one embodiment, the Step S4 includes: conveying the battery 4 to a position where the top-bottom surface packaging mechanism 21 is disposed; driving, by the guide mechanism 3, the top-bottom surface packaging mechanism 21 to move synchronously with the battery 4 in the first direction X (in the same direction as the battery 4), and driving, by the first driving assembly 211 of the top-bottom surface packaging mechanism 21, the first pressing members 213 to move towards the battery 4 and enabling the parts of the protective film 5 extending beyond the upper end and the lower end of the large-sized side surface of the battery 4 to be pressed against and attached to the top surface and the bottom surface of the battery 4. The Step S4 further includes: conveying the battery 4 to a position where the small-sized side surface packaging mechanism 22 is disposed; driving, by the guide mechanism 3, the small-sized side surface packaging mechanism 22 to move synchronously with the battery 4 in the first direction X (in the same direction as the battery 4), and driving, by the second driving assembly 221 of the small-sized side surface packaging mechanism 22, the two second pressing members 223 to move towards the battery 4 and enable the parts of the protective film 5 extending beyond the left end and the right end of the large-sized side surface of the battery 4 to be pressed against and attached to the two small-sized side surfaces of the battery 4.

In one embodiment, the packaging method further includes Step S5: attaching a top insulating sheet to the top surface of the battery 4 via a grasping mechanism. After the Step S5 is completed, the battery 4 may be transferred into the next process.

In the present disclosure, the packaging device includes the conveying mechanism, the packaging mechanism, and the guide mechanism. The conveying mechanism is configured to convey the battery in the first direction. Prior to the battery being conveyed to the position where the packaging mechanism is disposed, a protective film is attached to each of two large-sized side surfaces of the battery. The protective film extends beyond the two large-sized side surfaces of the battery. The packaging mechanism is mounted at the guide mechanism. The packaging mechanism includes the driving assembly, the two brackets spaced apart from each other, and the two pressing members arranged parallel to each other. The two pressing members are rotatably mounted at the two brackets, respectively. The two brackets are connected to the driving assembly. Prior to the battery being conveyed to the position where the packaging mechanism is disposed, the guide mechanism is used to drive the packaging mechanism to move towards the battery in the second direction. When the battery is conveyed to the position where the packaging mechanism is disposed, the guide mechanism is used to drive the packaging mechanism to move in the same direction as the battery and synchronously with the battery. Also, the driving assembly is configured to drive the two pressing members to move towards the battery and press a part of the protective film extending beyond the large-sized side surface of the battery against the top surface, the bottom surface, or the two small-sized side surfaces of the battery. Therefore, the side surfaces, the top surface, and the bottom surface of the battery can be packed without rotating the battery, reducing the time required for packaging and thus improving the manufacturing efficiency of the packaging device.

## Claims

1. A packaging device, comprising:
a conveying mechanism configured to convey a battery in a first direction, wherein prior to the battery being conveyed to a position where a packaging mechanism is disposed, a protective film is attached to and extends beyond each of two large-sized side surfaces of the battery;
the packaging mechanism comprising a driving assembly, two brackets spaced apart from each other, and two pressing members arranged parallel to each other, wherein the two pressing members are rotatably mounted at the two brackets, respectively, wherein the two brackets are connected to the driving assembly, and wherein the driving assembly is configured to drive the two pressing members to move towards the battery and press a part of the protective film extending beyond the large-sized side surface of the battery against a top surface, a bottom surface, or two small-sized side surfaces of the battery; and
a guide mechanism, wherein the packaging mechanism is mounted at the guide mechanism, and wherein the guide mechanism is configured to:
prior to the battery being conveyed to the position where the packaging mechanism is disposed, drive the packaging mechanism to move towards the battery in a second direction; and
when the battery is conveyed to the position where the packaging mechanism is disposed, drive the packaging mechanism to move in the first direction same as the battery and synchronously with the battery, the first direction being different from the second direction.

2. The packaging device according to claim 1, wherein the packaging mechanism comprises:
a top-bottom surface packaging mechanism comprising a first driving assembly, two first brackets spaced apart from each other, and two first pressing members overlapping with each other in a third direction and being parallel to each other, the third direction being perpendicular to both the first direction and the second direction, wherein the two first pressing members are rotatably mounted at the two first brackets, respectively, wherein the two first brackets are connected to the first driving assembly, and wherein the first driving assembly is configured to drive the two first pressing members to both move in the second direction or move towards each other in the third direction, and press the part of the protective film extending beyond the large-sized side surface of the battery against the top surface and the bottom surface of the battery; and
a small-sized side surface packaging mechanism comprising a second driving assembly, two second brackets spaced apart from each other, and two second pressing members arranged at a same level and parallel to each other, wherein the two second pressing members are rotatably mounted at the two second brackets, respectively, wherein the second driving assembly is connected to the two second brackets, and wherein the second driving assembly is configured to drive the two second pressing members to both move in the second direction or move towards each other in the first direction, and press the part of the protective film extending beyond the large-sized side surface of the battery against the two small-sized side surfaces of the battery.

3. The packaging device according to claim 2, wherein:
the first driving assembly comprises a first air cylinder, a piston of the first air cylinder being configured to reciprocate in the second direction, and the two first brackets being fixedly connected to a piston rod of the first air cylinder; and/or
the second driving assembly comprises a second air cylinder, a piston of the second air cylinder being configured to reciprocate in the second direction, and the two second brackets being fixedly connected to a piston rod of the second air cylinder.

4. The packaging device according to claim 2, wherein:
the first driving assembly comprises a first motor, a first transmission shaft, and a first transmission assembly, wherein the first transmission shaft is connected to the first motor and the first transmission assembly, wherein the two first brackets are connected to the first transmission assembly, and wherein the first transmission assembly is configured to convert a rotation of the first transmission shaft into a rectilinear movement of the two first pressing members in the third direction; and/or
the second driving assembly comprises a second motor, a second transmission shaft, and a second transmission assembly, wherein the second transmission shaft is connected to each of the second motor and the second transmission assembly, wherein the two second brackets are connected to the second transmission assembly, and wherein the second transmission assembly is configured to convert a rotation of the second transmission shaft into a rectilinear movement of the two second pressing members in the first direction.

5. The packaging device according to claim 4, wherein:
the first transmission assembly comprises a first driving gear and two first racks, wherein the first driving gear is sleeved around the first transmission shaft, wherein the two first racks are disposed on a left side and a right side of the first driving gear, respectively, and engaged with the first driving gear, and wherein the two first brackets are fixedly connected to the two first racks, respectively; and
the second transmission assembly comprises a second driving gear and two second racks, wherein the second driving gear is sleeved around the second transmission shaft, wherein the two second racks are disposed on an upper side and a lower side of the second driving gear, respectively, and engaged with the second driving gear, and wherein the two second brackets are fixedly connected to the two second racks, respectively.

6. The packaging device according to claim 5, wherein:
the top-bottom surface packaging mechanism further comprises a first driven gear and a first mounting plate, wherein the first driven gear is rotatably mounted at the first mounting plate, wherein the first driven gear is spaced apart from the first driving gear in the third direction, and wherein the first racks are engaged with the first driven gear; and
the small-sized side surface packaging mechanism further comprises a second driven gear and a second mounting plate, wherein the second driven gear is rotatably mounted at the second mounting plate, wherein the second driven gear is spaced apart from the second driving gear in the first direction, wherein the second driven gear is arranged at a same level as the second driving gear, and wherein the two second racks are engaged with the second driven gear.

7. The packaging device according to claim 2, wherein the packaging mechanism comprises at least two top-bottom surface packaging mechanisms and/or at least two small-sized side surface packaging mechanisms, the at least two top-bottom surface packaging mechanisms being symmetrically arranged at two opposite sides of the battery, and the at least two small-sized side surface packaging mechanisms being symmetrically arranged at two sides of the battery.

8. The packaging device according to any one of claims 1 to 7, wherein the guide mechanism comprises:
a guide member; and
a movable member movably mounted at the guide member, the packaging mechanism being mounted at the movable member, wherein:
the guide member has a first segment and a second segment connected to each other, the first segment being parallel to the second direction, and the second segment being parallel to the first direction.

9. The packaging device according to any one of claims 1 to 7, wherein the two first pressing members and the two second pressing members are each rollers.

10. A packaging method for packing a battery using the packaging device according to any one of claims 1 to 9, wherein the packaging method comprises:
placing a battery to be packed on the conveying mechanism, wherein the protective film is attached to and extends beyond each of the two large-sized side surfaces of the battery;
conveying, by the conveying mechanism, the battery in the first direction;
driving, prior to the battery being conveyed to the position where the packaging mechanism is disposed, the packaging mechanism by the guide mechanism to move towards the battery in the second direction, wherein the first direction is different from the second direction;
driving, when the battery is conveyed to the position where the packaging mechanism is disposed, the packaging mechanism by the guide mechanism to move in the first direction same as the battery and synchronously with the battery, and
driving, by the driving assembly of the packaging mechanism, the two pressing members to move towards the battery and press the part of the protective film extending beyond the large-sized side surface of the battery against the top surface, the bottom surface, or the two small-sized side surfaces of the battery.
